# EUROPEAN PATENT SPECIFICATION

(11) **EP 3 827 717 B1**
(45) Date of publication and mention of the grant of the patent: **23.10.2024**
(21) Application number: 19219955.2
(22) Date of filing: 30.12.2019
(51) Int. Cl.: A47J 43/044, A47J 27/00

(54) **DEVICE FOR FROTHING LIQUID, E.G. MILK**
VORRICHTUNG ZUM AUFSCHÄUMEN EINER FLÜSSIGKEIT WIE Z. B. MILCH
DISPOSITIF POUR FAIRE MOUSSER UN LIQUIDE, PAR EXEMPLE, LE LAIT

(30) Priority: 28.11.2019 DE 202019106625 U
(43) Date of publication of application: 02.06.2021
(73) Proprietor: Versuni Holding B.V., 5656 AE Eindhoven (NL)
(72) Inventor: ZWART, Bart-Jan, 5656 AE Eindhoven (NL); BERTRAM, Dietrich, 5656 AE Eindhoven (NL)
(74) Representative: Vollering, Stefanus Franciscus Maria

(56) References cited:
- EP-A1- 1 772 087
- EP-A1- 1 935 302
- EP-A1- 2 870 902
- EP-A1- 3 510 905
- EP-B1- 1 772 087
- EP-B1- 1 900 315
- EP-B1- 1 935 302
- WO-A1-2019/020722
- DE-B- 1 066 961
- DE-C- 917 996

## Description

### FIELD OF THE INVENTION

The present invention relates to frothing of liquids, particularly to frothing of beverages, such as milk. In particular, the invention relates to a device for frothing milk. Further, the invention relates to a coffee machine comprising such a device.

### BACKGROUND OF THE INVENTION

For some beverages, such as coffee, chocolate or milk, etc., it may be desirable to froth and/or heat the beverage. For this purpose, a so-called stand-alone frother may be used that may comprise a heated liquid-container and an integrated motor-driven whisk or the like. A drawback of such a frother is that cleaning of the liquid container as well as the whisk may be difficult. The beverage may burn against the heated container wall, making cleaning cumbersome. Further, the design freedom of such a frother may be limited, because the components need to be adapted to the cleaning requirements. In particular, the design must allow the removal of burnt beverage, e.g. milk from the container wall.

Furthermore, handheld frothers are known. This type of frother may comprise a whisk that can be immersed into the beverage for frothing. A drawback of such a frother is that, when a hot beverage is desired, the drink needs to be heated up separately, rendering the entire preparation process cumbersome and lengthy.

EP 3 510 905 A1 describes a heating assembly for a kitchen appliance such as a blender, for passively heating food, comprising a heating member for generating heat by means of relative motion. The heating member is arranged adjacent a component of the kitchen appliance with which there is relative motion so as to generate heat, and means are provided for adjusting the heating member so as to adjust the heat generated.

### SUMMARY OF THE INVENTION

There may therefore be a need to improve frothing of liquids, more specifically beverages, particularly in terms of making it less cumbersome and/or making it more comfortable. The object of the present invention is solved by the subject-matter of the appended independent claims, wherein further embodiments are incorporated in the dependent claims.

According to claim 1, there is provided a device for frothing milk, comprising:
a drive unit,
a heating unit, and
a frothing means, wherein the frothing means comprises a total contact surface area of at least 0.01 m² and is operably connected or connectable to:
   the drive unit for being moved by said drive unit to froth milk, and
   the heating unit to transfer heat from said heating unit to the frothing means for transfer of thermal energy to the milk during frothing thereof.

As used herein, the term "drive unit" may be any suitable electrically operated device allowing for movement, e.g. rotation and/or translation, of the frothing means. For example, the drive unit may include an electric motor that allows battery operation, mains operation or a combination of both. Preferably, the drive unit comprises an electrical connection for the supply of electrical energy and/or power.

As used herein, the term "heating unit" may be any suitable electrically operated device configured to convert electrical energy into thermal energy and configured to transfer such thermal energy, e.g. in the form of heat, to another entity, its surroundings, or the like. For example, the transfer of heat from the heating unit to the frothing means may be based, at least partially, on thermal conduction, thermal convection, and/or thermal radiation. The heating unit may be stationary in relation to the drive unit and/or the frothing means, or move, e.g. rotate and/or translate therewith. Preferably, the heating unit comprises an electrical connection for the supply of electrical energy and/or power.

As used herein, the term "frothing means" may in principle comprise any type of drivable and/or movable means that can meet the conditions in terms of total contact surface area and heat transfer. The frothing means may for example be detachably or fixedly connected to the drive unit via e.g. a rod-shaped element, or the like. Alternatively, the frothing means may for instance be driven contactless, e.g. via an alternating, for instance a rotating magnetic field. During operation, the frothing means is at least partially immersed into or surrounded by the liquid.

Thus, the term "operably connected or connectable" as used herein may include a fixed connection or a detachable connection. The connection may include a mechanical and/or electrical connection. It may include a contactless connection (e.g. based on a magnetic field, induction, radiation, etc.). The connection may be a direct connection, or may include one or more intermediate components.

The frothing means may be operably connected or connectable to the drive unit via a first connection and to the heating unit via a second connection. The first and second connection may differ from each other or comprise, at least partly, the same components.

The "transfer of thermal energy" (e.g. heat) from the frothing means to the liquid may be based on thermal convection. In some embodiments, the frothing means may be formed from a metal material, such as aluminum, steel, stainless steel, any alloy thereof, or the like.

The term "total contact surface" as used herein, may refer to that surface of the frothing means that receives thermal energy from the heating unit and in use may contact the liquid, when immersed therein. In use, the liquid may be partially displaced due to the movement of the frothing means. Therefore, the total contact surface may also be understood as that surface of the frothing means that, when immersed in a volume of liquid as intended, and without being moved by the drive unit, contacts said liquid.

The provided device may improve frothing of liquids, since the functions of frothing and heating are combined in a single component: the frothing means. Thus, frothing and heating can be done simultaneously, by the same means, making frothing less cumbersome then some prior art methods. Also, cleaning of the device may be easier, since there is no separate heating means to be cleaned. Only the frothing means needs cleaning. Also, the risk of liquid, e.g. milk, getting burnt to the heating surface is small or at least smaller then in conventional milk frothers, because the heating surface forms part of the frothing means that in use are in continuous movement relative to the liquid, so the liquid gets no chance to stick thereto and/or become burnt. This will make cleaning easier.

The total contact surface area of at least 0.01 m² ensures that sufficient heat can be transferred to the liquid in an acceptable amount of time, taking into account a liquid volume between for instance 80 and 120 ml (which corresponds to an average beverage serving).

Preferably, frothing and heating are done simultaneously. However, according to an embodiment, the heating unit and drive unit may be controlled and/or powered independently of each other, thus allowing for example the heating unit to be powered off, at least temporarily, to allow only frothing, e.g. to prepare a cold frothed beverage. Similarly, the drive unit may be powered off, at least temporarily, to allow only heating, e.g. to prepare a hot, unfrothed beverage.

According to an embodiment, the frothing means may be operably connected to or connectable to the heating unit by means of a rod. The rod may serve to transfer thermal energy from the heating unit to the frothing means, e.g. via thermal conduction.

The frothing means may be operably connected to or connectable to the drive unit by a rod, e.g. the same rod or a different rod. The rod may serve to transfer kinetic energy of the drive unit to the frothing means, e.g. to rotate or translate the frothing means. The rod may for instance be detachably or non-detachably connected to the heating unit and/or the drive unit. It may coincide or be aligned with a drive axis of the drive unit.

According to an embodiment, the frothing means comprises at least one plate shaped member contributing to the total contact surface area.

The term "plate shaped" as used herein may refer to a member or portion of the frothing means, having a width extending in a first direction, a length extending in a second direction and a thickness extending in a third direction, wherein the width and length each are considerable larger than the thickness. For instance, the width and the length may each be at least two times larger than the thickness, more preferably at least five times larger, and most preferably at least ten times larger. The width and length may for instance span a surface to which the thickness may extend transversely or perpendicularly. The cross section of the plate shaped member may be angular, more particular rectangular. The plate shape does not necessarily have to be flat; it may for instance be curved, bent or angled, etc. The plate shaped member may for instance include a blade, a disc, a fin, or the like.
With such plate shaped member, the total contact surface area may easily be maximized and/or adjusted, for instance by varying the length and/or width of the member. Further, such plate shaped member (or part thereof) may easily be curved, bent or otherwise deformed, to create turbulence in the liquid during use (e.g. similar to a propeller or the like). This may enhance the mixing of liquid and air and thus enhance the frothing process. Preferably, the frothing means are shaped in such way that little to no propulsion is generated when immersed and moved, e.g. rotated, in the liquid.

In an embodiment, the plate shaped member may comprise at least one slot or recess.

The slot or recess may for instance extend, at least partially, through a flat side of the plate shaped member. It may for instance have an open U-shape form, at an edge of the member, or be an enclosed recess. It may penetrate the member completely, like a through hole, or be formed as a pocket or blind hole.

Thus, the contact surface area of the frothing means may be further increased. Additionally, the slot or recess may enhance the turbulence generating properties of the frothing means, allowing better mixture of liquid and air.

According to an embodiment, the plate shaped member, or at least a portion thereof, may have an inclined orientation relative to a rotary axis of the frothing means. Such angled orientation may again help to create turbulence during frothing, which may help to get air mixed into the liquid.

According to an embodiment, the plate shaped member projects in radial direction from a rotary axis of the frothing means (150) such that at least three sides of the plate shaped member are exposed to contribute to the total contact surface area.

The plate shaped member may for instance with one side be coupled, connected or otherwise associated to aforementioned rod. Thus, the required total contact surface area of at least 0.01 m² can more readily be achieved, since at least three sides of the plate shaped member may be exposed to the liquid, in use, when immersed in said liquid and thus may contribute to the total contact surface area.

In an embodiment, the frothing means may comprise a number of plate shaped members. The members may for instance be shaped like fins.

The term "fin" as used herein may be understood as a kind of extended surface as for instance used in the field of heat transfer. The fin surface may extends from an axis (e.g. of the heating unit and/or the drive unit) to increase the contact surface area and with that the rate of heat transfer to or from the environment by increased convection.

For example, the number of members or fins may be 2, 3, 4, 5, 6, 7, etc. These members or fins may extend radially from a rod that operably connects the members to the heating unit and/or the drive unit. The members or fins may extend at different positions along a circumference of the rod, to form for instance a propeller-like frothing means. Alternatively or additionally, the members of fins may extend at different positions along the length of the rod, to form several propeller layers. Thus, together the members or fins may form a propeller-like frothing means, with one or more propeller layers. Such propeller-like frothing means may have good frothing properties.

In addition, by providing more than one member or fin, the total contact surface area of the frothing means may be further increased, which may for instance allow the heat transfer rate to be increased and/or the heating time to be reduced. Alternatively, the dimensions of the individual members or fins may be reduced.

The member(s) or fin(s) may be made from a heat conductive material, e.g. from a metal material, such as steel, aluminum and/or a suitable alloy. They may have a uniform or varying cross-section. The required total contact surface area of the frothing means and/or required geometric parameters may be determined based on heat transfer requirements, assumptions, if needed, and using existing heat transfer calculation models. In an embodiment, the heating unit may comprise an induction heating unit adapted to inductively heat the frothing means.

For example, the induction heating unit may comprise an electromagnet and an electronic oscillator that passes a high-frequency alternating current (AC) through the electromagnet. The alternating magnetic field may penetrate e.g. the aforementioned rod and/or the frothing means, generating electric currents flowing through the parts, and due to resistance of the parts' material cause the parts to heat up.
Alternatively, the heating means may comprise a cartridge heater or the like.

Cartridge heaters are known per se, so are not described in detail here. Such a cartridge heater may for instance be tube-shaped and may at least partially extend along or around a drive axis of the drive unit. It may, for example, contact aforementioned rod, be arranged and/or guided inside the rod, rotate with the rod, or be stationary with respect to the rod (via suitable bearings or the like), etc.

According to an embodiment, the frothing means may comprise a total heat transfer rate of at least 150 W, preferably of at least 180 W, further preferably of at least 200 W, and particularly preferably of at least 500 W.

This total heat transfer rate may be adjusted by varying, for example, the total contact surface area of the frothing means, the geometry of the frothing means, a heat transfer coefficient of the components involved in heat transfer, etc.

The required heat transfer rate may vary dependent on e.g. the volume and/or type of liquid to be heated, an initial temperature of the liquid, a desired end temperature of the liquid, material and other properties of the frothing means, etc. By way of example, the volume of liquid may be between about 80 ml and about 120 ml, preferably about 100 ml, the heat transfer coefficient may be between about 4000 W/m² and about 6000 W/m², preferably about 5000 W/m². Thus, a desired volume of liquid may be heated to a desired temperature in a reasonable time.

According to another embodiment, the device may be configured as a handheld frothing device. The drive unit and the heating unit may be arranged in a housing that is at least partially configured as a handle, to be gripped by a user. The frothing means is connected to or connectable to the heating unit and the drive unit via a rod. The frothing means may be immersed by a user in a liquid container, such as a cup or mug, holding a beverage to be heated and/or frothed.

According to a further embodiment, the housing may be provided with attachment means, adapted for attachment to a container. The container may be provided with cooperating attachment means. For example, the housing and/or the container may comprise a threaded connection, a bayonet type connection, a clamp or snap-fit connection, a form-fit connection, or the like. In such case, the device may be placed in or at an opening of the container and held in position via said attachment means. Thus, operation of the device can be made even more comfortable, as the user will not need to keep the device in position during operation.

According to an embodiment, the device may be configured as a stand-alone frothing device. The device may comprise a container for receiving the liquid to be frothed, and a lid for closing the container. The drive unit may be arranged below the container or in the lid. Likewise, the heating unit may be arranged below the container or in the lid. The frothing means is operably connectable or connected to the heating unit and the drive unit, so as to extend within the container.

According to an embodiment, the device may be configured as a portable device. In such case, aforementioned container may function as a travel mug, in which a user may froth and/or heat his beverage on-the-go. The attachment between the container and the lid, or the container and the housing may in such case be liquid tight. The device may be battery operated.

According to claim 15, there is provided a coffee machine, comprising means for making coffee and a device for frothing milk according to any embodiment of the first aspect.

These and other aspects of the present invention will become apparent from and elucidated with reference to the embodiments described hereinafter.

### BRIEF DESCRIPTION OF THE DRAWINGS

Fig 1 shows in a schematic perspective view a device for frothing a liquid according to an embodiment, the device being adapted to be used as a handheld device.
Fig. 2 shows in a schematic perspective view a device for frothing a liquid according to an embodiment, the device being adapted to be used as a handheld device.
Fig. 3 shows in a schematic perspective view a device for frothing a liquid according to an embodiment, the device being adapted to be used as a stand-alone device.
Fig. 4 shows in a schematic view a household device or coffee machine comprising means for making coffee and a built-in device for frothing a liquid, e.g. milk according to an embodiment.

### DETAILED DESCRIPTION OF EMBODIMENTS

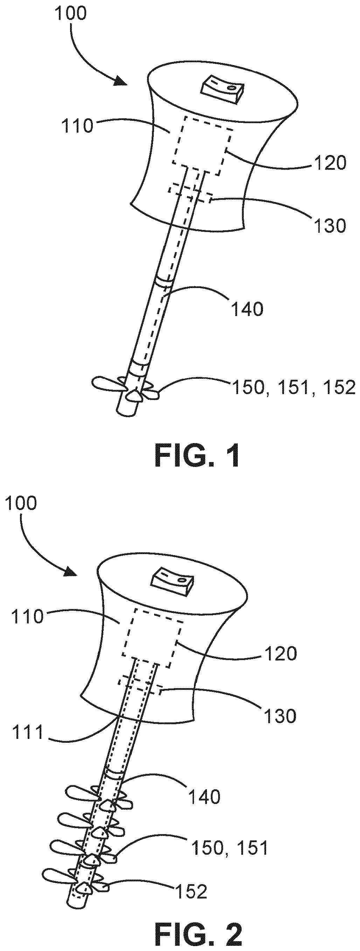

Figures 1 and 2 show in schematic perspective view two exemplary embodiments of a device 100 for frothing a liquid, more particularly a beverage, e.g. milk. In these exemplary embodiments, device 100 is provided as a handheld frothing device. It comprises a housing 110 formed as a handle, to be held in the hand of a user. The device further comprises a drive unit 120 and a heating unit 130 that are both accommodated in the housing 110, a frothing means 150 and a rod 140 that operably connects the frothing means 150 to the drive unit 120 and the heating unit 130.

The drive unit 120 is arranged to rotate the frothing means 150. In alternative embodiments (not shown), the drive unit 120 may be arranged to translate the frothing means, or to rotate and translate the frothing means. The drive unit 120 may for instance comprise an electric motor.

The heating unit 130 is arranged to convert electrical energy into thermal energy or heat. The heating unit 130 may for instance be a so-called cartridge heater, preferably comprising a heating coil, a sheath, and an electrical connection option.
The device 100 may further comprise a power supply (not shown), such as a battery supply or a mains power supply, for powering the drive unit 120 and heating unit 130. Suitable converters may be provided, e.g. a voltage converter or the like.

The device 100 further comprises at least one electrical switch, to switch on/off the power supply to the drive unit 120 and/or the heating unit 130. In the illustrated embodiment, the switch is arranged at an upper side of the housing 110. In alternative embodiments, the switch may be arranged at any other suitable location. The switch may be configured to switch on and/or off both units 120, 130 simultaneously. Alternatively, one or more further switches may be provided, to allow independent switching of the drive unit 120 and the heating unit 130. Alternatively, at least one of the two units 120, 130 may be switched on and/or off with a time delay after actuation of the switch, e.g. via an interposed relay or the like, whereas the other unit 130, 120 may switch on and/or off immediately.

The frothing means 150 is arranged to froth and heat a liquid. During operation, the frothing means 150 may be immersed in a volume of liquid to be frothed and/or heated. This liquid may be placed in a suitable container (not shown). The frothing means 150 has a total contact surface area of at least 0.01 m². As will be explained below, with such total contact surface area sufficient heat can be transferred to heat a liquid volume between 80 and 120 ml to an acceptable temperature at an acceptable speed.

The frothing means 150 is operably connected or connectable to the drive unit 120 and the heating unit 140 via rod 140. The rod 140 may, for example, be formed from a metal material, such as aluminum, steel, stainless steel, any alloy thereof, or the like. Optionally, rod 140 may be made of a material with comparatively good thermal conductivity. At a first longitudinal end, rod 140 may be detachably or non-detachably connected to drive unit 120, wherein a detachable connection can be designed, for example, as a plug connection, screw connection, bayonet connection or the like. According to Fig. 1, the first longitudinal end of rod 140 extends into housing 110 where it is connected to drive unit 120. Further, in at least some embodiments, rod 140 may be a structural part of the heating unit 130, wherein it may be heated directly. Alternatively, rod 140 may be hollow. In such case, the heating unit 130 may extend at least partly inside the rod 140. Optionally, a movable section of rod 140 and/or heating unit 130 may rotate with drive unit 120 and may be connected to a stationary section of rod 140 and/or heating unit 130 via a suitable coupling, j oint, etc.

According to Fig. 1, the frothing means 150 is arranged at a distance from the first longitudinal end of the rod 140, between the first longitudinal end and a free second longitudinal end. The frothing means 150 extends away from an outer circumferential surface of the rod 140. The frothing means 150 may be integrally formed with the rod 140 or be attached thereto via suitable attachment means, such as screws, a threaded connection, a snap-fit connection, or the like.

In the illustrated embodiment of Fig. 1, the frothing means 150 has a plate shape. More particularly, the frothing means 150 comprises a fin-set with four fins 151. In alternative embodiments, the number of fins 151 may differ, for example to increase the total contact surface area of the fin-set. The fins 151 comprise a recess 152, which may also be referred to as a slot, aperture, or the like. The recess 152 extends at least partially through a flat side of the fin 151. Further, the fins 151 have an inclined orientation with respect to a rotation axis of the frothing means 150, i.e. the fins include an angle with a plane that extends perpendicular to the rotation axis of the frothing means 150.

The dimensions of the individual fins 151 may vary. However, experiments have shown that with the following exemplary dimensions good results can be achieved for both frothing and heating. For example, the individual fin 151 may have a length, which may be measured from rod 140, of about 0.03 m to about 0.07 m, preferably of about 0.05 m. It may have a thickness of about 0.003 m to about 0.007 m, preferably of about 0.005 m. It may have a minimum width, i.e. an inner diameter, measured at or near rod 140, of about 0.005 m to 0.015 m, preferably of about 0.010 m, and a maximum width, i.e. an outer diameter, measured at or near rod 140, of about 0.030 m to 0.050 m, preferably of about 0.040 m.

If the preferred ones of the above dimensions are used and, for example, four individual fins 151 are provided, the total contact surface area of the frothing means is about 0,0114 m² resulting in a heat transfer rate of about 897 W. An exemplary rotation speed of drive unit 120 and/or rod 140 and/or the frothing means 150 may be set between about 8.000 rpm or 133,3333 1/s and about 12.000 rpm or 200 1/s, preferably to about 10.000 rpm or 166,6667 1/s. An exemplary temperature of heating unit 130 may be set to 90 °C, and an exemplary heat transfer coefficient may be 5000 W/m². An exemplary thermal conductivity of the individual fin in case of aluminum may be 186 W/m. These exemplary dimensions and parameters may allow, for example, heating about 100 ml of milk from an initial temperature of about 4° C to a final temperature of about 65° C within a maximum frothing time of 2 minutes. Of course, the above dimensions and/or parameters may be changed if, for example, the above temperatures, the volume of the milk to be heated etc. have different values. Fig. 2 shows a further embodiment of a device 100 according to the invention. This device differs from the one shown in Figure 1 in that the frothing means 150 has several fin-sets, more particularly four fin sets, with each fin set having four fins 151 (similar to the single fin-set illustrated in Figure 1). In the illustrated embodiment, the fin-sets are identical, and spaced apart along the length of the rod 140 with identical spacings. In alternative embodiments, the fin-sets and/or the spacings between individual fin-sets may vary. Since, according to this embodiment, the total contact surface area of the frothing means 150 can be increased by using more than one fin-sets, either the individual fins 151 can have smaller dimensions, or the heating time can be reduced, particularly compared to that described above.

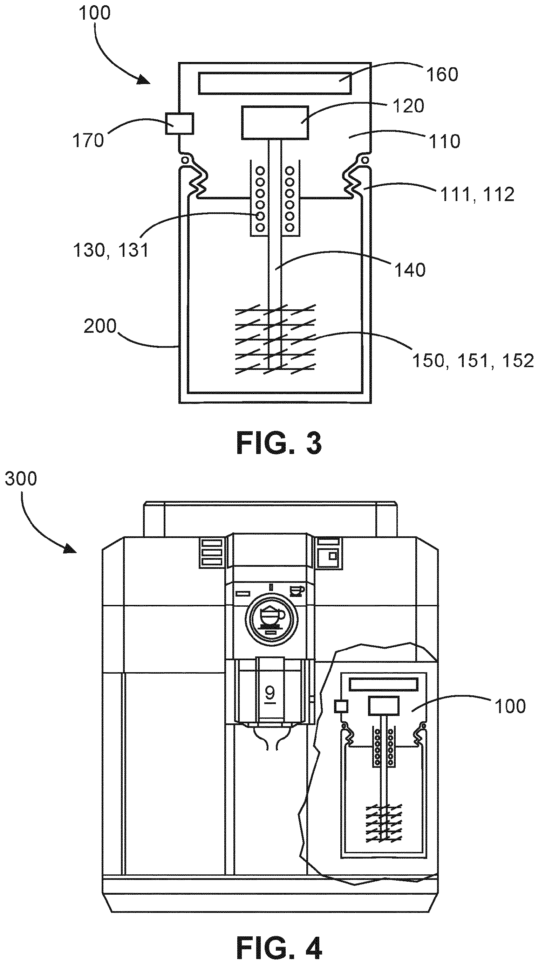

Fig. 3 shows a further exemplary embodiment of a device 100. In this embodiment, the device 100 is provided as a stand-alone frothing device. In this embodiment, the housing 110 is adapted to form a lid for a container 200. The housing 110 is provided with attachment means 111, here an outer thread 112 that may cooperate with an inner thread provided in the liquid container 200. The liquid container 200 may for instance be formed from metal, or a suitable plastic material.

The frothing means 150 could be similar to those shown in Figure 1 or 2, but in the illustrated embodiment, comprises a set of disc shaped fins 151, more particularly 5 disc shaped fins 151, that are spaced apart along the length of the rod 140. Portions of the discs 151 have been bend downward, to create recesses 152 and help generating turbulence during use. The dimensions of the discs 151 may be similar to those described above. Each disc 151 may have a contact surface area of at least 0.002 m² so that the total contact surface area is at least 0.01 m².

It is noted that the individual frothing means 150 may be detachably attached to rod 140 and/or to an adjacent one of the frothing means 150.

In functional terms, drive unit 120 and heating unit 130 as shown in Fig. 3 may at least largely correspond to that of the embodiments described with reference to Figures 1 and 2. Alternatively, in at least some embodiments, heating unit 130 may comprise an induction heating unit 131, adapted to inductively heat at least e.g. rod 140 or any similar element suitable for holding frothing means 150. For example, induction heating unit 131 may comprise an electromagnet and an electronic oscillator that passes a high-frequency alternating current through the electromagnet. The alternating magnetic field penetrates e.g. rod 140 generating electric currents inside. The electric currents flowing through the resistance of the material of e.g. rod 140, which may preferably be a suitable metal material, heat it. By way of example, as indicated in Fig. 3, rod 140 may be at least partially surrounded by induction heating unit 131 and/or may be guided through it.

In Fig. 3, the drive unit 120 is illustrated to be arranged in the housing 110, i.e. in the lid of the device. It is operably connected to the frothing means via the same rod 140 as the heating unit 130. In alternative embodiments, the drive unit 120 may be operably connected to the frothing means 150 via a different mechanical connection. In yet other embodiments, the drive unit 120 may be operably connected to the frothing means 150 in a contactless way. Driving of the frothing means 150 may then for instance be done by having the drive unit 120 generate an alternating magnetic field, e.g. by rotating a magnet above or below the frothing means 150 and by providing the frothing means 150 with a ferromagnetic part. In such case, the drive unit 120 may be arranged inside the housing 110, as shown, or outside the housing, e.g. below the bottom of the container 200. The frothing means 50 may be rotatably mounted in the container 200, e.g. on the rod 140 or any other suitable support structure.

In at least some embodiments, device 100 may further comprise an electronic unit 160. Although the electronic unit 160 is described here only by reference to Fig. 3, it may also be provided in the same or a similar way in the embodiments according to Fig. 1 and 2. Further, the term "electronic" may include electromechanical components. The electronic unit 160 may be adapted to control at least one parameter that is selected from: heating power of heating unit 130, duty cycle of heating unit 130, speed of drive unit 120, duty cycle of drive unit 120 etc. Some of the above parameters may be controlled based on a timer, an automatic switch-off function, or the like. In at least some embodiments, electronic unit 160 may comprise one or more of a power electronics, one or more sensors, such as a temperature sensor, speed sensor, or the like, one or more actuators, such as a switch, a relay, or the like, adapted to actuate e.g. drive unit 120, heating unit 130 etc., control electronics, comprising e.g. a control program, means for obtaining input parameter of the sensors or the like, means to output control signals to e.g. drive unit 120, heating unit 130, a display, an indicator light, and a microprocessor or the like.

Further, in at least some embodiments, device 100 may further comprise a user interface 170. Although user interface 170 is described here only by reference to Fig. 3, it may also be provided in the same or a similar way in the embodiments according to Fig. 1 and 2. For example, user interface 170 may be adapted, for example, to transfer user input to device 100, e.g. chosen program, the desired temperature, rotation speed etc. Further, user interface 170 may comprise a display, adapted to display functional parameters, like program steps, warning message etc., wherein the term "display" may also include indicator lights. Preferably, user interface 170 is operatively connected to at least electronic unit 160 and/or drive unit 120 and/or heating unit 130.

Fig. 4 shows in schematic view an exemplary coffee machine 300 and a device 100, which may be an integral component of the coffee machine 300. The latter may be any type of coffee machine, such as an espresso machine, a drip filter coffee maker, a capsule or pod coffee machine, or the like, and may be of a manual, semi-automatic or full-automatic type. It is noted that although Fig. 4 shows as an example the embodiment of device 100 according to Fig. 3, the other embodiments according to Figs. 1 and 2 may also be implemented. Further, since coffee machines of different types are generally known, they are not described in detail here. An exemplary coffee machine 300 may comprise, for example, one or more of the following means of preparing coffee: a container or holding mechanism for coffee powder, coffee beans, coffee capsules, coffee pads or the like, a grinder, a water container, a water pump, etc. The coffee machine 300 may comprise an electronic unit, electronic control unit or the like, and/or a user interface, a power supply, which may at least partially replace the corresponding components of device 100 or interact with it. As indicated in Fig. 4, device 100 may be arranged within a housing of the coffee machine 300 or be detachably connected thereto.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A device (100) for frothing milk, comprising:
a drive unit (120),
a heating unit (130), and
a frothing means (150), wherein the frothing means (150) is operably connected or connectable to:
the drive unit (120) for being moved by said drive unit (120) to froth milk, and
the heating unit (130) to transfer thermal energy, e.g. heat, from said heating unit (130) to the frothing means (150) for transfer of thermal energy to the milk during frothing thereof, **characterized in that** the frothing means (150) comprises a total contact surface area of at least 0.01 m².

2. The device according to claim 1, wherein the frothing means (150) is operably connected to or connectable to the heating unit (130) by means of a rod (140).

3. The device according to any one of the preceding claims, wherein the frothing means (150) is operably connected to or connectable to the drive unit (120) by means of a rod, for example the rod (140) as recited in claim 2.

4. The device according to any one of the preceding claims, wherein the drive unit (120) is arranged to rotate the frothing means (150).

5. The device according to any one of the preceding claims, wherein the frothing means (150) comprises at least one plate shaped member contributing to the total contact surface area.

6. The device according to claim 5, wherein the plate shaped member comprises at least one slot or recess (152).

7. The device according to claim 5 or 6, wherein the plate shaped member, or at least a portion thereof, has an inclined orientation relative to a rotary axis of the frothing means.

8. The device according to any one of claims 5 to 7, wherein the plate shaped member projects in predominantly radial direction from a rotary axis of the frothing means (150) such that at least three sides of the plate shaped member are exposed to contribute to the total contact surface area.

9. The device according to any one of the preceding claims, wherein the frothing means (150) comprise at least two plate shaped members or fins, extending in a predominantly radial direction from a rod that operably connects the fins to the heating unit (130) and/or the drive unit (120), at different positions along the length of said rod (140).

10. The device according to any one of the preceding claims, wherein the frothing means (150) comprise at least two plate shaped members or fins, extending in a predominantly radial direction from a rod that operably connects the fins to the heating unit (130) and/or the drive unit (120), at different positions along a circumference of said rod (140).

11. The device according to any one of the preceding claims, wherein the heating unit (130) comprises an induction heating unit (131), adapted to inductively heat the frothing means (150).

12. The device according to any one of the preceding claims, wherein the frothing means (150) comprises a total heat transfer rate of at least 150 W, preferably at least 180 W, more preferably at least 200 W, and most preferably at least 500 W.

13. The device according to any one of the preceding claims, wherein the device is a stand-alone frothing device, comprising a container for receiving milk to be frothed, and a lid for closing the container, wherein the drive unit (120) is arranged below the container or in the lid, and the heating unit (130) is arranged below the container or in the lid, and wherein the frothing means is operably connectable or connected to the heating unit (130) and the drive unit (120), so as to extend within the container.

14. The device according to any one of claims 1 to 12, wherein the device is a handheld frothing device, wherein the drive unit (120) and the heating unit (130) are arranged in a housing (110) that is at least partially configured as a handle, and wherein the frothing means (150) is connected to or connectable to the heating unit (130) and the drive unit (120) via a rod (140).

15. A coffee machine (300) comprising a device (100) for frothing milk according to any one of the preceding claims.

## Patentansprüche

1. Milchaufschäumvorrichtung (100), umfassend:
eine Antriebseinheit (120),
eine Heizeinheit (130) und
ein Aufschäummittel (150), wobei das Aufschäummittel (150) mit Folgendem wirkverbunden oder verbindbar ist:
der Antriebseinheit (120), um von der Antriebseinheit (120) bewegt zu werden, um Milch aufzuschäumen, und
wobei die Heizeinheit (130) thermische Energie, z. B. Wärme, von der Heizeinheit (130) an das Aufschäummittel (150) zum Übertragen von thermischer Energie an die Milch während des Aufschäumens übertragen soll, **dadurch gekennzeichnet, dass** das Aufschäummittel (150) eine Gesamtkontaktoberfläche von mindestens 0,01 m²umfasst.

2. Vorrichtung nach Anspruch 1, wobei das Aufschäummittel (150) mittels einer Stange (140) mit der Heizeinheit (130) wirkverbunden oder verbindbar ist.

3. Vorrichtung nach einem der vorstehenden Ansprüche, wobei das Aufschäummittel (150) mittels einer Stange, beispielsweise der Stange (140) nach Anspruch 2, mit der Antriebseinheit (120) wirkverbunden oder verbindbar ist.

4. Vorrichtung nach einem der vorstehenden Ansprüche, wobei die Antriebseinheit (120) dazu eingerichtet ist, das Aufschäummittel (150) zu drehen.

5. Vorrichtung nach einem der vorstehenden Ansprüche, wobei das Aufschäummittel (150) mindestens ein plattenförmiges Element umfasst, das zu der Gesamtkontaktoberfläche beiträgt.

6. Vorrichtung nach Anspruch 5, wobei das plattenförmige Element mindestens einen Schlitz oder eine Aussparung (152) umfasst.

7. Vorrichtung nach Anspruch 5 oder 6, wobei das plattenförmige Element oder mindestens ein Teil davon eine geneigte Ausrichtung relativ zu einer Drehachse des Aufschäummittels aufweist.

8. Vorrichtung nach einem der Ansprüche 5 bis 7, wobei das plattenförmige Element in überwiegend radialer Richtung von einer Drehachse des Aufschäummittels (150) derart vorsteht, dass mindestens drei Seiten des plattenförmigen Elements freiliegen, um zu der Gesamtkontaktoberfläche beizutragen.

9. Vorrichtung nach einem der vorstehenden Ansprüche, wobei das Aufschäummittel (150) mindestens zwei plattenförmige Elemente oder Lamellen umfasst, die sich in einer überwiegend radialen Richtung von einer Stange erstrecken, die die Lamellen mit der Heizeinheit (130) und/oder der Antriebseinheit (120) an unterschiedlichen Positionen entlang der Länge der Stange (140) wirkverbindet.

10. Vorrichtung nach einem der vorstehenden Ansprüche, wobei das Aufschäummittel (150) mindestens zwei plattenförmige Elemente oder Lamellen umfasst, die sich in einer überwiegend radialen Richtung von einer Stange erstrecken, die die Lamellen mit der Heizeinheit (130) und/oder der Antriebseinheit (120), an unterschiedlichen Positionen entlang eines Umfangs der Stange (140) wirkverbindet.

11. Vorrichtung nach einem der vorstehenden Ansprüche, wobei die Heizeinheit (130) eine Induktionsheizeinheit (131) umfasst, die zum induktiven Erhitzen des Aufschäummittels (150) angepasst ist.

12. Vorrichtung nach einem der vorstehenden Ansprüche, wobei das Aufschäummittel (150) eine Gesamtwärmeübertragungsrate von mindestens 150 W, bevorzugt mindestens 180 W, bevorzugter mindestens 200 W und besonders bevorzugt mindestens 500 W umfasst.

13. Vorrichtung nach einem der vorstehenden Ansprüche, wobei die Vorrichtung eine eigenständige Aufschäumvorrichtrung ist, die einen Behälter zum Aufnehmen von aufzuschäumender Milch und einen Deckel zum Verschließen des Behälters umfasst, wobei die Antriebseinheit (120) unterhalb des Behälters oder in dem Deckel eingerichtet ist, und die Heizeinheit (130) unterhalb des Behälters oder in dem Deckel eingerichtet ist, und wobei das Aufschäummittel mit der Heizeinheit (130) und der Antriebseinheit (120) wirkverbindbar oder verbunden ist, um sich innerhalb des Behälters zu erstrecken.

14. Vorrichtung nach einem der Ansprüche 1 bis 12, wobei die Vorrichtung eine handgehaltene Aufschäumvorrichtung ist, wobei die Antriebseinheit (120) und die Heizeinheit (130) in einem zumindest teilweise als ein Handgriff ausgebildeten Gehäuse (110) eingerichtet sind, und wobei das Aufschäummittel (150) über eine Stange (140) mit der Heizeinheit (130) und der Antriebseinheit (120) verbunden oder verbindbar ist.

15. Kaffeemaschine (300), die eine Vorrichtung (100) zum Aufschäumen von Milch nach einem der vorstehenden Ansprüche umfasst.

## Revendications

1. Dispositif (100) pour faire mousser du lait, comprenant :
une unité d'entraînement (120),
une unité de chauffage (130), et
un moyen de moussage (150), dans lequel le moyen de moussage (150) est relié ou peut être relié fonctionnellement à :
l'unité d'entraînement (120) destinée à être déplacée par ladite unité d'entraînement (120) pour faire mousser le lait, et
l'unité de chauffage (130) pour transférer de l'énergie thermique, par exemple de la chaleur, de ladite unité de chauffage (130) au moyen de moussage (150) pour transférer de l'énergie thermique au lait pendant son moussage, **caractérisé en ce que** le moyen de moussage (150) comprend une surface de contact totale d'au moins 0,01 m².

2. Dispositif selon la revendication 1, dans lequel le moyen de moussage (150) est relié ou peut être relié fonctionnellement à l'unité de chauffage (130) au moyen d'une tige (140).

3. Dispositif selon l'une quelconque des revendications précédentes, dans lequel le moyen de moussage (150) est relié ou peut être relié opérationnellement à l'unité d'entraînement (120) au moyen d'une tige, par exemple la tige (140) telle que décrite dans la revendication 2.

4. Dispositif selon l'une quelconque des revendications précédentes, dans lequel l'unité d'entraînement (120) est conçue pour faire tourner le moyen de moussage (150).

5. Dispositif selon l'une quelconque des revendications précédentes, dans lequel le moyen de moussage (150) comprend au moins un élément en forme de plaque contribuant à la surface de contact totale.

6. Dispositif selon la revendication 5, dans lequel l'élément en forme de plaque comprend au moins une fente ou un évidement (152).

7. Dispositif selon la revendication 5 ou 6, dans lequel l'élément en forme de plaque, ou au moins une partie de celui-ci, présente une orientation inclinée par rapport à un axe de rotation du moyen de moussage.

8. Dispositif selon l'une quelconque des revendications 5 à 7, dans lequel l'élément en forme de plaque fait saillie dans une direction principalement radiale à partir d'un axe de rotation du moyen de moussage (150) de telle sorte qu'au moins trois côtés de l'élément en forme de plaque sont exposés pour contribuer à la surface de contact totale.

9. Dispositif selon l'une quelconque des revendications précédentes, dans lequel le moyen de moussage (150) comprend au moins deux éléments en forme de plaque ou ailettes, s'étendant dans une direction principalement radiale à partir d'une tige qui relie fonctionnellement les ailettes à l'unité de chauffage (130) et/ou l'unité d'entraînement (120), à différentes positions le long de la longueur de ladite tige (140).

10. Dispositif selon l'une quelconque des revendications précédentes, dans lequel le moyen de moussage (150) comprend au moins deux éléments en forme de plaque ou ailettes, s'étendant dans une direction principalement radiale à partir d'une tige qui relie fonctionnellement les ailettes à l'unité de chauffage (130) et/ou l'unité d'entraînement (120), à différentes positions le long d'une circonférence de ladite tige (140).

11. Dispositif selon l'une quelconque des revendications précédentes, dans lequel l'unité de chauffage (130) comprend une unité de chauffage par induction (131), adaptée pour chauffer par induction le moyen de moussage (150).

12. Dispositif selon l'une quelconque des revendications précédentes, dans lequel le moyen de moussage (150) comprend un taux de transfert de chaleur total d'au moins 150 W, préférentiellement d'au moins 180 W, plus préférentiellement d'au moins 200 W, et le plus préférentiellement d'au moins 500 W.

13. Dispositif selon l'une quelconque des revendications précédentes, dans lequel le dispositif est un dispositif de moussage autonome, comprenant un récipient destiné à recevoir du lait à faire mousser, et un couvercle destiné à fermer le récipient, dans lequel l'unité d'entraînement (120) est agencée sous le récipient ou dans le couvercle, et l'unité de chauffage (130) est agencée sous le récipient ou dans le couvercle, et dans lequel le moyen de moussage est reliée ou peut être reliée fonctionnellement à l'unité de chauffage (130) et à l'unité d'entraînement (120), de manière à s'étendre à l'intérieur du récipient.

14. Dispositif selon l'une quelconque des revendications 1 à 12, dans lequel le dispositif est un dispositif de moussage portatif, dans lequel l'unité d'entraînement (120) et l'unité de chauffage (130) sont agencées dans un boîtier (110) qui est au moins partiellement configuré en tant que poignée, et dans lequel le moyen de moussage (150) est relié ou peut être relié à l'unité de chauffage (130) et à l'unité d'entraînement (120) par l'intermédiaire d'une tige (140).

15. Machine à café (300) comprenant un dispositif (100) pour faire mousser du lait selon l'une quelconque des revendications précédentes.
